# EUROPÄISCHE PATENTSCHRIFT

(11) **EP 0 861 162 B1**
(45) Veröffentlichungstag und Bekanntmachung des Hinweises auf die Patenterteilung: **31.07.2002**
(21) Anmeldenummer: 96943053.7
(22) Anmeldetag: 06.12.1996
(51) Int. Cl.: B60K 6/02

(54) **MOTORFAHRZEUG MIT ELEKTRISCHEM GENERATOR**
MOTOR VEHICLE WITH ELECTRICAL GENERATOR
VEHICULE AUTOMOBILE AVEC GENERATEUR ELECTRIQUE

(30) Priorität: 08.12.1995 DE 19545922
(43) Veröffentlichungstag der Anmeldung: 02.09.1998
(73) Patentinhaber: Magnet-Motor Gesellschaft für magnetmotorische Technik mbH, D-82319 Starnberg (DE)
(72) Erfinder: EHRHART, Peter, D-81375 München (DE); HEEG, Manfred, D-82319 Starnberg (DE)
(74) Vertreter: Klunker . Schmitt-Nilson . Hirsch
(86) Internationale Anmeldenummer: EP9605478
(87) Internationale Veröffentlichungsnummer: WO9721560

(56) Entgegenhaltungen:
- EP-A- 0 379 357
- WO-A-91/08919
- DE-A- 3 743 317
- DE-A- 4 102 076
- DE-A- 4 323 601

## Beschreibung

Gegenstand der Erfindung ist ein Motorfahrzeug wie in Anspruch 1 definiert und ein Motorfahrzeug wie in Anspruch 2 definiert.

Ein Element der vorliegenden Erfindung ist die Ausbildung und Anordnung des elektrischen Generators. Bei üblichen Kraftfahrzeugen wird von der Ausgangswelle des Verbrennungsmotors über einen Keilriemen der Generator angetrieben. Nicht nur bei Straßenfahrzeugen, sondern auch bei Lastkraftwagen, Bussen und dergleichen ist der elektrische Leistungsbedarf in den letzten Jahren stark angestiegen, so daß der elektrische Generator ("Lichtmaschine") immer leistungsfähiger gebaut wurde. Notfalls wurden auch mehrere elektrische Generatoren vorgesehen. Die üblichen Bordnetzspannungen (12 V/24 V) bedingen bei elektrischen Verbrauchern hoher Leistung entsprechend hohe Ströme. Die Leitungsquerschnitte müssen entsprechend groß gewählt werden.

Ein Motorfahrzeug mit den Oberbegriffsmerkmalen (a) bis (d) des Anspruchs 1 und des Anspruchs 2 ist aus DE-A-43 23 601 bekannt.

Aus US-A-4 877 273 ist es bekannt, ein Motorfahrzeug, welches allerdings keinen zu der Welle des Verbrennungsmotors koaxialen Generator besitzt, mit einer Leistungselektronik gemäß Merkmal (e) in Anspruch 1 und in Anspruch 2 auszustatten.

Aus DE-A-37 43 317 ist es bekannt, ein Motorfahrzeug, welches allerdings keinen zu der Welle des Verbrennungsmotors koaxialen Generator besitzt, mit einer Leistungselektronik mit Gleichspannungszwischenkreis, an den elektronische Baugruppen zur Spannungswandlung für verschiedene Spannungen angeschlossen sind (s. Merkmal (f) des Anspruchs 1), auszustatten.

Bei dem erfindungsgemäßen Motorfahrzeug kann trotz Kompakter Bauweise eine relativ hohe elektrische Leistung durch den elektrischen Generator bereitgestellt werden.

Es ist bevorzugt, den Rotor des Generators mit (Hochenergie-) Dauermagneten auszustatten. Rotor und Stator des Generators sind in vorteilhafter Weise räumlich zwischen Verbrennungsmotor und Antriebsstrang angeordnet und bilden eine modulare Einheit, die rasch und problemlos montiert werden kann.

Durch den Wegfall der mechanischen Zwischenverbindung zwischen Verbrennungsmotor und Generator, also insbesondere durch den Wegfall des Riementriebs bei den bisher üblichen Fahrzeugen, wird eine kompakte Bauweise erreicht. Der Antriebsstrang ist direkt an den elektrischen Generator gekoppelt und enthält eingangsseitig z. B. ein Automatikgetriebe mit Drehmomentwandler oder ein Schaltgetriebe mit Kupplung.

Bei den üblichen Motoren steht im Bereich der Ausgangswelle des Motors genügend Raum für die Unterbringung des vorzugsweise als dünne Scheibe ausgebildeten elektrischen Generators zur Verfügung. Durch die dauermagnetische Erregung läßt sich der für den Generator zur Verfügung stehende Bauraum gut ausnutzen, so daß man ein hohes Drehmoment und damit eine hohe elektrische Leistung in Bezug auf Volumen und Gewicht des Generators erzielt. Die elektrische Leistung des Generators liegt vorzugsweise im Bereich zwischen 5 und 10 kW. Damit kann der Generator mühelos die in den üblichen Fahrzeugen bereitzustellende Leistung liefern. Mit einem Generator der beschriebenen Anordnung und Bauweise lassen sich aber auch problemlos weit höhere Leistungen (> 50 kW) realisieren, die bei beispielsweise schweren Fahrzeugen gebraucht werden, wenn normalerweise mechanisch angetriebene Neben- oder Zusatzverbraucher vorteilhafterweise auf elektrischen Antrieb umgestellt werden (z. B. Lenkhilfpumpen, Klima- bzw. Kühlanlagen u.ä.).

Um den Generator als Modul in kompakter Weise ausgestalten zu können, wird der Durchmesser relativ groß gewählt, während die axiale Länge relativ gering ist.

Man kann den Generator in sogenannter Innenläuferbauart ausführen, wobei der mit der Kurbelwelle des Verbrennungsmotors drehende Rotor innen liegt, während der Stator radial außerhalb des Rotors liegt.

Demgegenüber hat die Ausführung in sogenannter Außenläuferbauart gewisse Vorteile. Wenn bei dieser Ausführung in Außenläuferbauart der Rotor außen liegt und der Stator innen angeordnet ist, kann man das dann besonders hohe Massenträgheitsmoment des Rotors nützen, so daß außer dem Rotor keine zusätzliche Schwungscheibe vorhanden sein muß. Dies gilt in gleicher Weise für die Innenläuferausführung mit entsprechend großem Massenträgheitsmoment des Rotors.

Die Ausführung des Generators mit einem Rotor und einem Stator, die jeweils als dünnwandiger Zylinder ausgebildet sind, beläßt im Bereich der Achse der Motorwelle genug Raum, um Teile des Getriebes oder der Kupplung darin aufnehmen zu können. Dadurch läßt sich die gesamte Baulänge von Verbrennungsmotor/Generator/Getriebe sehr kurz halten. Als besonders günstiges Verhältnis von Einbaudurchmesser/Einbaulänge des Generators hat sich ein Wert von 2 oder darüber erwiesen. Das heißt: Der Durchmesser des Generators ist mindestens doppelt so groß wie dessen axiale Länge.

Der Rotor kann eine weitere Funktion der Schwungscheibe übernehmen, indem er mit einer Außenverzahnung ausgestattet ist, welche mit dem Ritzel des Anlassermotors kämmt. Besonders einfach ist diese Möglichkeit bei der Außenläuferbauart zu realisieren, jedoch auch beim Innenläufer bei geeigneter Lagerung des Stators möglich.

Das Drehmoment, welches zum Starten des Verbrennungsmotors aufzubringen ist, braucht nicht ausschließlich von dem elektrischen Anlassermotor aufgebracht zu werden; denn der Generator selbst kann als Motor arbeiten, um beim Starten des Verbrennungsmotors den separaten Anlassermotor zu unterstützen oder diesen gar vollständig zu ersetzen. Der Generator wird dann über die genannte Leistungselektronik von der Bordbatterie gespeist, so daß das von dem als Motor geschalteten Generator aufgebrachte Drehmoment den Anlassermotor unterstützt. Bei besonders starkem Generator reicht dessen Drehmoment zum Starten des Verbrennungsmotors möglicherweise allein aus, so daß ein gesonderter Anlasser entfallen kann. Eine spezielle Maßnahme der Erfindung sieht vor, für den motorischen Betrieb eine eigene elektronische Baugruppe einzusetzen. Dadurch kann sowohl der generatorische wie auch motorische Betrieb mit jeweilig speziell dafür ausgelegten Baugruppen dargestellt werden

Zweckmäßigerweise wird der modular aufgebaute Generator mit eingangsseitigem und ausgangsseitigem Norm-Flansch versehen, so daß er mit dem Motorblock bzw. mit dem Getriebegehäuse gekoppelt werden kann, ohne daß spezielle Anpassungsmaßnahmen erforderlich wären. Der Generator läßt sich in verschiedenen Baugrößen/Leistungen fertigen und wird mit Norm-Flanschen versehen.

Bei der Ausbildung gemäß Anspruch 1 dient die Leistungselektronik als Kommutierungseinrichtung, die die von dem Generator gelieferte Wechselspannung zunächst in eine Gleichspannung umsetzt, und einen Gleichspannungszwischenkreis bildet. Die Spannung im Gleichspannungszwischenkreis liegt bevorzugt zwischen 100 und 1000 Volt. Mit dieser Gleichspannung können separate elektronische Baugruppen für spezielle Verbraucher verschiedene Gleichspannungen und Wechselspannungen mit der geeigneten Frequenz und Amplitude erzeugen. Alternativ oder zusätzlich kann die Gleichspannung des Zwischenkreises aber auch direkt zur Versorgung von entsprechenden Verbrauchern genutzt werden.

Eine andere Möglichkeit besteht darin, die Leistungselektronik z. B. in Direktumrichterbauart so auszulegen, daß sie an ihren Ausgangsklemmen direkt die von den verschiedenen Verbrauchern benötigten Spannungen und Frequenzen bereitstellt (Anspruch 2).

Durch die relativ hohe Spannung im Gleichspannungszwischenkreis besteht die Möglichkeit, bestimmte Verbraucher mit relativ hoher Spannung zu speisen, beispielsweise Heizelemente, die relativ viel Leistung benötigen. Durch die relativ hohe Spannung können Leitungen mit vergleichsweise geringem Leitungsquerschnitt verwendet werden. Außerdem wird die Dimensionierung von Halbleiterschaltern begünstigt.

Es ist zweckmäßig, die Leistungselektronik mit einer Steuerungs- und Regelungseinrichtung zu versehen, die die ausgangsseitg angeschlossenen Verbraucher bezüglich der von ihnen aufgenommenen elektrischen Leistung steuert und regelt. Dies geschieht bevorzugt nach Vorgabe der von den Verbrauchern zu erbringenden Werte (Beispiel: Temperatur der Kühlanlage). Dabei kann diese genannte Einrichtung Teil der Leistungselektronik selbst sein, oder als separate Regelung vorgesehen sein, die auf einzelne Verbraucher oder Verbauchergruppen eingreift.

Wenn von dem Antriebsstrang zum Antrieb des Fahrzeugs dem Motor eine bestimmte Leistung entnommen wird, kann die Leistungselektronik den Motor so regeln, daß die für eine elektrische Abgabeleistung des Generators benötigte mechanische Leistung von dem Verbrennungsmotor zur Verfügung gestellt wird, ohne daß dabei die von dem Verbrennungsmotor an den Antriebsstrang gelieferte Leistung gemindert wird. Die oben beschriebene Regelung kann aber auch ganz speziellen Zwecken dienen, so beispielsweise kann die Leistungselektronik die Leistung für einzelne oder sämtliche Verbraucher ggf. auf Null oder ein Minimum herunterregeln, wenn die gesamte oder nahezu die gesamte Leistung des Verbrennungsmotors auf den Antriebsstrang gehen soll. Dies kann z. B. der Fall bei dem Wunsch maximaler Fahrzeugbeschleunigung sein.

Oben wurde die Verwendung des Generators als Motor angesprochen, damit der Motor beispielsweise zum Starten des Verbrennungsmotors verwendet werden kann. Allgemein ist es natürlich auch möglich, den Motor zum Antreiben des Antriebsstrangs zu verwenden wenn entsprechend elektrische Leistung und Energie vorhanden ist. Hierzu enthält dann die Leistungselektronik in an sich bekannter Weise Vierquadranten-Wechselrichter in Form separater Baugruppen. Wenn der Generator als Motor arbeitet, erfolgt dann die Einspeisung des elektrischen Stroms über diese Baugruppen.

Eine weitere von der Erfindung beanspruchte Anwendung des Generators ist, hiermit Störungen im gleichförmigen Drehzahlverlauf der Kurbelwelle des Verbrennungsmotors und des Antriebsstranges, die zu unerwünschter Geräuschbildung im Fahrzueg führen, zu dämpfen bzw. zu eliminieren. Im einfachsten Fall können dies auch Drehschwingungen der genannten Teile sein.

Die genannte Dämpfung wird dadurch erreicht, daß bei Änderungen der aktuellen Rotordrehzahl gegenüber der mittleren Rotordrehzahl über den Stator Drehmomente und damit Kräfte auf den Rotor aufgebracht werden, die diesen Änderungen in Richtung und Amplitude entgegenwirken. Dies geschieht durch entsprechende Erhöhung oder Erniedrigung des Stroms in den Statorspulen, der von der zugeordneten Leistungselektronik gesteuert wird.

In anderen Worten, erfolgt z. B. eine kurzzeitige positive Beschleunigung des Rotors, so wird vom Stator mittels entsprechender Stromänderung in der Leistungselektronik eine bremsende Kraft aufgebracht. Während der normalen generatorischen Betriebsweise des Generators bedeutet das eine kurzzeitige Erhöhung des Spulenstroms gegenüber dem normalen Betriebswert, wodurch mehr Leistung, d. h. Drehmoment abgenommen und die zu hohe Drehzahl verzögert wird.

Wird der Rotor hingegen gegenüber der gleichförmigen Drehzahl durch z. B. eine Drehschwingung verzögert, wird - wiederum im generatorischen Betriebsfall des Generators betrachtet - vom Stator durch Stromerniedrigung das vom Generator abgenommene Drehmoment erniedrigt, wodurch in der Folge eine resultierende positiv beschleunigende Kraft auf den Rotor ausgeübt wird.

Beide Betriebsarten, d. h. aktive Drehmomenterhöhung und -erniedrigung am Generatorrotor folgen jeweils hintereinander, da jede vollständige Drehschwingung eine Beschleunigung und Verzögerung des Rotors bzw. umgekehrt bedeutet. Das aktiv aufgebrachte Gegendrehmoment folgt der Drehbeschleunigung mit einem gewissen Phasenversatz, so daß sich in der Summe nur noch eine Drehschwingung mit stark reduzierter Amplitude, d. h. eine gedämpfte Drehschwingung, ergibt. Es ist auch eine adaptive Ausregelung in der Weise vorstellbar, daß das Schwingungsmuster der Drehschwingung als charakteristische Eigenschaft der Gesamtanordnung Verbrennungsmotor-Generator ermittelt wird, der nach Phase und Amplitude entgesengeregelt wird, so daß die Schwingungsanregung zu Null reduziert wird. Dies kann z. B. mit einer sogenannten Fuzzy-Regelung erfolgen.

Zur Detektierung der Änderungen der Rotordrehzahl kann ein Stellungsgebersystem im Generator verwendet werden, aus dessen Signalen die Drehzahl des Rotors ermittelt wird. Die genannten Drehschwingungen äußern sich dann als Pulsieren der Drehzahl gegenüber dem gemittelten Wert der Drehzahl, die entsprechend herausgefiltert werden können.

Es ist bevorzugt, für den genannten Zweck die mit dem Generator verbundene, zur Auskopplung der elektrischen Leistung dienende Leistungselektronik zu verwenden. Es sind damit keine Zusatzteile erforderlich, insbesondere weil die Drehschwingungen, abgesehen von mit ihnen zusammenhängenden Verlusten, lediglich Energieschwankungen bedeuten. Je nach den speziellen Eigenschaften des Verbrennungsmotors und seiner rotierenden Teile können die genannten Drehzahlpusationen bzw. -schwingungen aber auch besonders hochfrequent sein, d. h. weit über der normalen Betriebsdrehzahl des Rotors liegen. In solchen Fällen ist es besonders bevorzugt, eine zusätzliche, besonders schnell arbeitende leistungselektronische und Regelungsbaugruppe getrennt zu der der Auskopplung elektrischer Leistung dienenden Elektronik zu installieren.

Im folgenden werden Ausführungsbeispiele der Erfindung anhand der Zeichnung näher erläutert. Es zeigen:
- Fig. 1: eine schematische Ansicht des Antriebsteils eines Motorfahrzeugs,
- Fig. 2: eine schematische Schnittansicht des in Fig. 1 vereinfacht dargestellten elektrischen Generators mit zugehöriger Leistungselektronik,
- Fig. 3: eine schematische Ansicht einer abgewandelten Ausführungsform eines elektrischen Generators,
- Fig. 4: eine schematische Ansicht einer weiteren abgewandelten Ausführungsform eines elektrischen Generators,
- Fig. 5: ein schematisches Schaltbild der an den Gleichspannungszwischenkreis geschalteten separaten elektronischen Baugruppen (Wechselrichter), und
- Fig. 6: eine Längsschnittansicht durch eine praktische Ausführungsform eines elektrischen Generators, der im Schwungradgehäuse eines Verbrennungsmotors angeordnet ist.

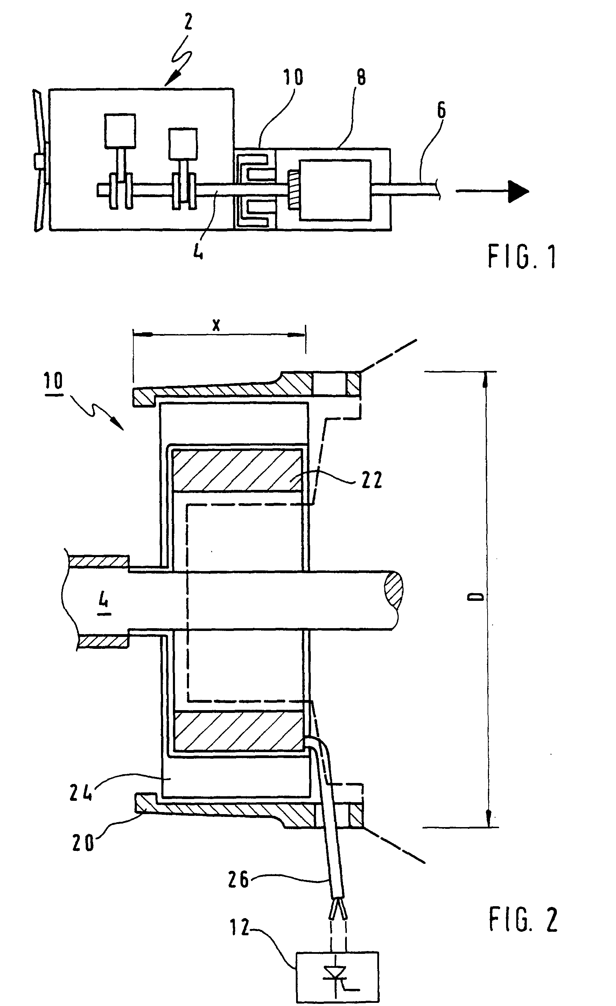

In Fig. 1 ist schematisch ein Verbrennungsmotor 2 dargestellt, die angedeuteten Kolben drehen über Pleuelstangen eine Kurbelwelle 4, deren Ausgang am rechten Ende des Motors 2 das Gehäuse eines elektrischen Generators 10 durchsetzt. Der von der Kurbelwelle 4 ausgehende Antriebsstrang 6 enthält eine Getriebeeinheit 8 einschließlich Drehmomentwandler oder Kupplung.

Wie in Fig. 1 schematisch dargestellt ist, befindet sich der elektrische Generator 10 in der Höhe der Kurbelwelle 4 des Motors 2, so daß sich der Rotor des Generators 10 in konzentrischer Anordnung mit der Kurbelwelle 4 befindet und sich zusammen mit der Kurbelwelle 4 dreht.

Baulich besteht das Gehäuse des Generators 10 aus einer dünnen Scheibe, deren axiale Länge geringer ist als ihr Durchmesser, im vorliegenden Beispiel ist der Durchmesser etwa doppelt so groß wie die axiale Länge des Generators 10. In Fig. 2 sind der Durchmesser D und die axiale Länge x angedeutet. Das Verhältnis D/x beträgt ≥ 2. Wie weiterhin in Fig. 2 zu sehen ist, ist der Generator 10 in einem Gehäuse 20 untergebracht, das an den Block des Verbrennungsmotors 2 bzw. an die Eingangsseite des Getriebes 8 angeschraubt werden kann.

In Fig. 2 befindet sich der Motor auf der linken Seite, der Antriebsstrang 6 einschließlich des Getriebes 8 auf der rechten Seite.

Der elektrische Generator 10 enthält einen als dünnwandigen Zylinder ausgebildeten Stator 22, der in nicht näher dargestellter Weise mit dem Gehäuse 20 verbunden ist.

Mit der Kurbelwelle 4 des Verbrennungsmotors 2 ist der ebenfalls als dünnwandiger Zylinder ausgebildete Rotor 24 gekoppelt. Von der Kurbelwelle 4 geht ein scheiben- bzw. glockenförmiger Träger in radialer Richtung ab, an dessen Umfangsbereich sind Hochenergie-Dauermagnete angebracht, die nur geringen Abstand von der Außenumfangsfläche des Stators 22 haben.

Der Rotor 24 stellt ein Massenträgheitsmoment dar, so daß der Rotor auch als Schwungscheibe für den Verbrennungsmotor 2 füngiert.

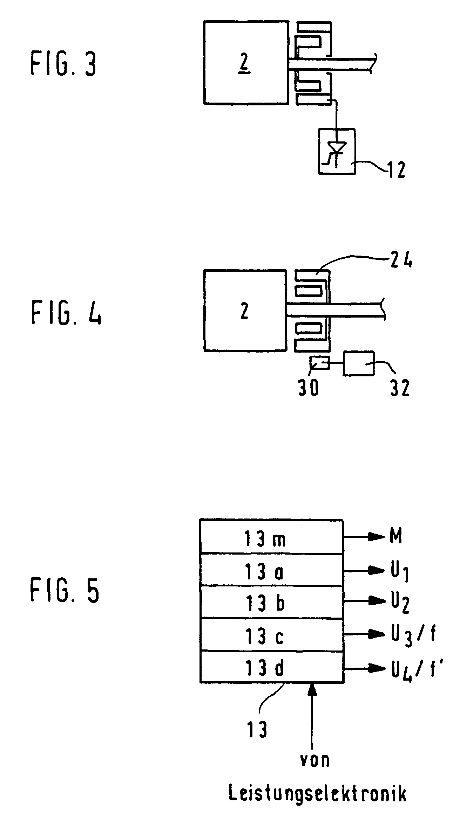

Von dem Stator 22 gehen Verbindungskabel 26 zu einer Leistungselektronik 12, die in an sich bekannter Weise ausgebildet ist, also einen Gleichspannungszwischenkreis enthält, der eine Gleichspannung von hier 100 V liefert. An dem Gleichspannungszwischenkreis schließt sich eine Wechselrichteranordnung an, und zwar im dargestellten Ausführungsbeispiel gemäß Fig. 5 in Form separater elektronischer Baugruppen zusammengefaßt in Baugruppeneinheit 13 zur Spannungswandlung für individuelle Verbraucher oder Verbrauchergruppen.

Gemäß Fig. 5 liefern ein Abschnitt 13a und ein Abschnitt 13b zwei unterschiedliche Spannungen U1 und U2, bei denen es sich um verschiedene Gleichspannungen handeln kann. Ein Abschnitt 13c liefert eine Wechselspannung U3 mit einer Frequenz f. Eine Baugruppe 13d liefert eine weitere Wechselspannung U4 mit einer anderen Frequenz f'. Ein zusätzlicher Wechselrichter 13m liefert den Antriebsstrom für den Generator, wenn dieser als Motor betrieben wird.

Die in Fig. 2 skizzierte Bauweise von Rotor 24 und Stator 22 in Form jeweils eines dünnen Hohlzylinders beläßt im Bereich der Kurbelwelle 4 noch beträchtlichen Raum, in den hinein ein Teil des Antriebsstrangs, im vorliegenden Fall des Getriebes 8, eingebaut werden kann. Dieser dem Motor mit der Kurbelwelle 4 zugewandte Endbereich des Getriebes 8 ragt in das Innere des Stators 22 hinein. Durch Ausnutzung dieses Raums läßt sich die Gesamtlänge von Verbrennungsmotor 2, elektrischem Generator 10 und Getriebeeinheit 8 verkürzen.

Die Leistungselektronik 12 beinhaltet eine Regelung für den Verbrennungsmotor, also für die elektrische/elektronische Einspritzeinrichtung des Verbrennungsmotors. Mit der in der Leistungselektronik 12 enthaltenen Regelung läßt sich die Leistung des Verbrennungsmotors so regeln, daß er zusätzlich zu der über den Antriebsstrang zu liefernden mechanischen Leistung noch die Leistung für den Generator 10 bereitstellt.

Ein besonderes Merkmal der Leistungselektronik 12 bzw. der Baugruppeneinheit 13 besteht darin, daß in bestimmten Situationen sämtliche angeschlossenen elektrischen Verbraucher abgeschaltet oder auf Sparbetrieb geschaltet werden, so daß der Verbrennungsmotor nahezu seine gesamte Leistung auf den Antriebsstrang zu geben vermag, wie dies z. B. bei maximaler Beschleunigung erforderlich ist.

Durch die individuelle Bereitstellung von verschiedenen Gleichspannungen und Wechselspannungen mit verschiedenen Frequenzen lassen sich einzelne Verbraucher separat mit elektrischer Leistung versorgen. Beispielsweise kann die Baugruppeneinheit 13 über ihren Abschnitt 13a eine relativ hohe Gleichspannung von 100 V an leistungsstarke Verbraucher, beispielsweise Heizelemente, liefern. Die relativ hohe Spannung ermöglicht eine Reduzierung der Leitungsquerschnitte und auch eine günstige Dimensionierung von Halbleiterschaltern, die den einzelnen elektrischen Verbrauchern zugeordnet sind.

Fig. 3 zeigt eine abgewandelte Ausführungsform. Bei dieser Ausführungsform ist der Rotor als Innenläufer ausgebildet, während der Stator sich radial außen bezüglich des Innenläufer-Rotors befindet.

Bei der in Fig. 4 dargestellten Variante ist der Rotor als Außenläufer ausgebildet, und er enthält auf seiner Außenseite eine nicht näher dargestellte Verzahnung, die mit einem Ritzel 30 eines elektrischen Anlassermotors 32 kämmt. Der als Motor arbeitende Generator kann dann im Verein mit dem Anlassermotor 32 zum Starten des Verbrennungsmotors 2 verwendet werden.

Der erfindungsgemäß vorgesehene elektrische Generator versorgt in an sich bekannter Weise das gesamte Fahrzeugbordnetz, kann darüberhinaus aber auch für den Betrieb von Zusatzeinrichtungen oder externen Einrichtungen eingesetzt werden, beispielsweise zum Betrieb von Pumpenmotoren, Lüfterantrieben und dergleichen. Wie oben ausgeführt, dient der Anlassermotor 32 gemäß Fig. 4 zum Anlassen des Verbrennungsmotors im Verein mit dem dann als Motor arbeitenden Generator. Man kann aber auch zum Anlassen des Motors ausschließlich den separaten Anlassermotor verwenden.

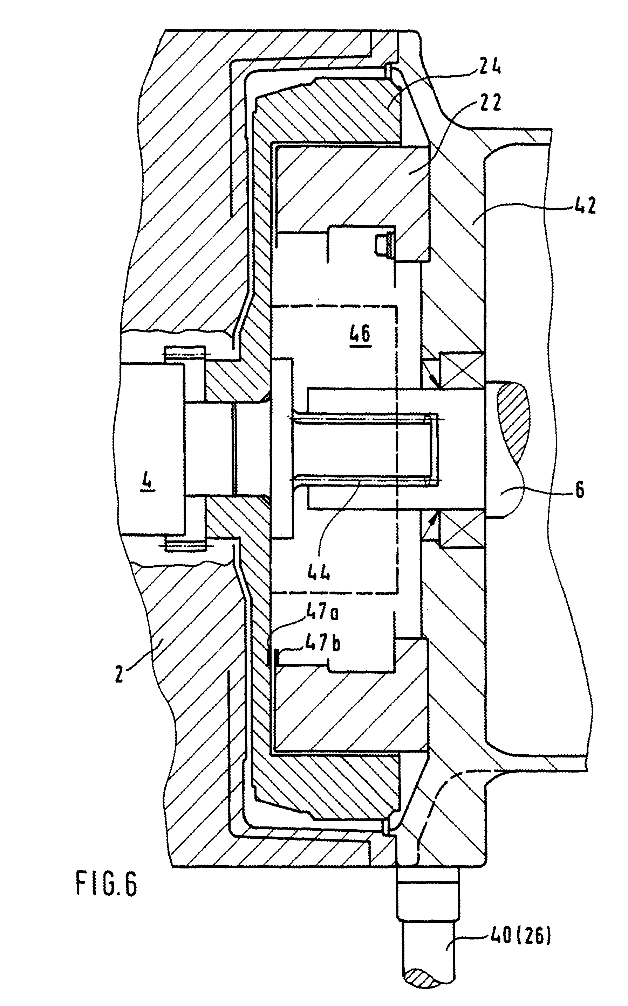

Fig. 6 zeigt einen Längsschnitt durch einen zwischen dem Verbrennungsmotor 2 und dem Getriebe 8 angeordneten elektrischen Generator 10 in einer konkreten baulichen Ausführungsform. Das Getriebe 8 schließt mit einem Getriebedeckel 42 ab, dessen Umfangsflansch bei üblichen Fahrzeugen an den dazu passenden Normflansch des Motorblocks angeschraubt ist, der aber gemäß Fig. 6 an dem Außenflansch des Gehäuses des Generators angebracht ist, wobei der Außenflansch seinerseits dann mit dem entsprechenden Flansch des Schwungradgehäuses des Verbrennungsmotors 2 verbunden ist.

Über ein Anschlußstück 40 sind die schematisch in Fig. 2 dargestellten elektrischen Verbindungskabel 26 dem Motor zugeführt. Das Anschlußstück 40 enthält außerdem Kühlmittelschläuche. Sowohl die Kühlmittelschläuche als auch die Verbindungskabel 26, die in Fig. 6 im einzelnen nicht dargestellt sind, sind in integrierten Kanälen innerhalb des Getriebedeckels 42 geführt. Die Eingangswelle des Getriebes ist mit der Kurbelwelle 4 über eine Steckverzahnung gekoppelt. Zwischen dem Generator und dem Getriebe 8 kann eine elastische Kupplung 46 angeordnet sein.

Mittels eines hochauflösenden Stellungsgebersystems 47a, 47b wird die Position des Rotors 24 relativ zum Stator 22 im Verlauf der Rotation detektiert. Dies kann beispielsweise durch die Überlagerung zweier Wechselfeldsignale realisiert werden, die in einer geeigneten Elektronik ausgewertet werden. Aus der Veränderung des Rotorlagesignals kann die Rotordrehzahl errechnt werden, und durch Mittelwertbildung oder durch Verlgeich von Drehzahl-Ist- und Sollwert können Abweichungen der momentanen Rotorderehzahl vom Mittelwert bzw. zwischen Ist- und Sollwert festgestellt werden. Die Reaktion von Generator und Leistungselektronik besteht darin, während der Rotation positive bzw. negative Zusatzkräfte aufzubringen, die den negativen bzw. positiven Drehzahlabweichungen oder, anders ausgedrückt, den diese Abweichungen verursachenden Kräften entgegenwirken.

## Patentansprüche

1. Motorfahrzeug aufweisend:
(a) einen Verbrennungsmotor (2) mit einer Welle (4);
(b) einen mechanischen Antriebsstrang (6), der mit der Welle (4) gekoppelt ist,
(c) einen elektrischen Generator (10), dessen Rotor (24) koaxial zu der Welle (4) des Verbrennungsmotors (2) zwischen diesem und dem Eingang des Antriebsstrangs (6) angeordnet ist und direkt von der Welle (4) angetrieben wird;
(d) und eine Leistungselektronik (12), an die der elektrische Ausgang des Generators (10) angeschlossen ist,
**dadurch gekennzeichnet**,
(e) daß die Leistungselektronik (12) mit dem Verbrennungsmotor (2) verbunden und derart ausgelegt ist, daß sie bei Änderungen der elektrischen Abgabeleistung des Generators (10) den Verbrennungsmotor (2) auf entsprechend geänderte, mechanische Leistung steuern kann;
(f) und daß die Leistungselektronik (12) einen Gleichspannungszwischenkreis aufweist, an den
- direkt elektrische Verbraucher und/oder
- elektronische Baugruppen (13a, 13b, 13c, 13d) zur Spannungswandlung für verschiedene Gleichspannungen und/oder Wechselspannungen einer oder mehrerer Frequenzen
angeschlossen sind.

2. Motorfahrzeug aufweisend:
(a) einen Verbrennungsmotor (2) mit einer Welle (4);
(b) einen mechanischen Antriebsstrang (6), der mit der Welle (4) gekoppelt ist,
(c) einen elektrischen Generator (10), dessen Rotor (24) koaxial zu der Welle (4) des Verbrennungsmotors (2) zwischen diesem und dem Eingang des Antriebsstrangs (6) angeordnet ist und direkt von der Welle (4) angetrieben wird;
(d) und eine Leistungselektronik (12), an die der elektrische Ausgang des Generators (10) angeschlossen ist,
**dadurch gekennzeichnet**,
(e) daß die Leistungselektronik (12) mit dem Verbrennungsmotor (2) verbunden und derart ausgelegt ist, daß sie bei Änderungen der elektrischen Abgabeleistung des Generators (10) den Verbrennungsmotor (2) auf entsprechend geänderte mechanische Leistung steuern kann;
(f) und daß die Leistungselektronik (12) ausgangsseitig direkt Spannungen und Frequenzen für verschiedene Verbraucher erzeugt.

3. Fahrzeug nach Anspruch 1,
**dadurch gekennzeichnet,**
**daß** der Gleichspannungszwischenkreis eine Gleichspannung zwischen 100 V und 1000 V liefert.

4. Fahrzeug nach einem der Ansprüche 1 bis 3,
**dadurch gekennzeichnet,**
**daß** der Rotor (24) und der Stator (22) des Generators (10) räumlich zwischen dem Verbrennungsmotor (2) und einem Getriebe (8) angeordnet sind.

5. Fahrzeug nach einem der Ansprüche 1 bis 4,
**dadurch gekennzeichnet,**
**daß** der Generator (10) in Außenläuferbauart mit äußerem Rotor (24) und innerem Stator (22) ausgebildet ist.

6. Fahrzeug nach einem der Ansprüche 1 bis 4,
**dadurch gekennzeichnet,**
**daß** der Generator (10) in Innenläuferbauart mit innerem rotierendem Rotor (24) und äußerem Stator (22) ausgebildet ist.

7. Fahrzeug nach einem der Ansprüche 1 bis 5,
**dadurch gekennzeichnet,**
**daß** der Rotor (24) mit dauermagnetischer Erregung vorgesehen ist.

8. Fahrzeug nach einem der Ansprüche 1 bis 7,
**dadurch gekennzeichnet,**
**daß** Rotor (24) und Stator (22) des Generators (10) jeweils als dünnwandige Zylinder ausgebildet sind, so daß im radial innen gelegenen Raum bezüglich Stator (22) und Rotor (24) ein Teil des mechanischen Antriebsstrangs (6) aufgenommen wird.

9. Fahrzeug nach einem der Ansprüche 1 bis 8,
**dadurch gekennzeichnet,**
**daß** das Verhältnis von Einbaudurchmesser zur axialen Einbaulänge des Generators (10) ≥ 2 beträgt.

10. Fahrzeug nach einem der Ansprüche 1 bis 9,
**dadurch gekennzeichnet,**
**daß** der Rotor (24) des Generators (10) als Schwungscheibe des Verbrennungsmotors (2) ausgebildet ist.

11. Fahrzeug nach einem der Ansprüche 1 bis 10,
**dadurch gekennzeichnet,**
**daß** der Rotor (24) des Generators (10) mit einer Außenverzahnung versehen ist, die mit einem Anlasserritzel (30) kämmt.

12. Fahrzeug nach einem der Ansprüche 1 bis 11,
**dadurch gekennzeichnet,**
**daß** das Gehäuse (20) des Generators (10) mit Befestigungsflanschen ausgestattet ist, die den Normmaßen der Flansche von Verbrennungsmotoren (2) entsprechen.

13. Fahrzeug nach einem der Ansprüche 1 bis 12,
**dadurch gekennzeichnet,**
**daß** die Leistungselektronik (12) eine elektrische/elektronische Leistungsregelung für die Summe der angeschlossenen Verbraucher beinhaltet.

14. Fahrzeug nach einem der Ansprüche 1 bis 12,
**dadurch gekennzeichnet,**
**daß** eine separate Leistungsregelung für einzelne Verbraucher oder Verbrauchergruppen vorgesehen ist.

15. Fahrzeug nach einem der Ansprüche 1 bis 14,
**dadurch gekennzeichnet,**
**daß** der elektrische Generator (10) das Fahrzeugbordnetz versorgt und/oder externe elektrische Zusatzeinrichtungen speist.

16. Fahrzeug nach einem der Ansprüche 1 bis 15,
**dadurch gekennzeichnet,**
**daß** der Generator (10) motorisch betreibbar ist und auf den Antriebsstrang (6) arbeitet oder als Anlasser (32) für den Verbrennungsmotor (2) dient oder einen separaten Anlassermotor (32) unterstützt.

17. Fahrzeug nach Anspruch 16,
**dadurch gekennzeichnet,**
**daß** die Leistungselektronik (12) derart ausgebildet ist, daß sie außer der leistungselektronischen Kommutierung im Generatorbetrieb auch die Ansteuerung des Generators (10) beim motorischen Betrieb übernimmt.

18. Fahrzeug nach Anspruch 16 oder 17,
**dadurch gekennzeichnet,**
**daß** die Leistungselektronik (12) eine eigene elektronische Baugruppe für den motorischen Betrieb des Generators (10) aufweist.

19. Fahrzeug nach einem der Ansprüche 1 bis 18,
**dadurch gekennzeichnet,**
**daß** der im generatorischen oder motorischen Betrieb arbeitende Generator (10) zur Dämpfung von Drehzahlstörungen oder Drehschwingungen, die auf der Welle des Verbrennungsmotors (2) und/oder im Getriebe (8) und/oder im mechanischen Antriebsstrang (6) auftreten, eingesetzt wird.

20. Fahrzeug nach Anspruch 19,
**dadurch gekennzeichnet,**
**daß** der Generator (10) zur Drehschwingungsdämpfung mit einer zusätzlichen leistungselektronischen und Regelungsbaugruppe ausgestattet ist.

## Claims

1. A motor vehicle comprising
(a) a combustion engine (2) having a shaft (4);
(b) a mechanical drive line (6) coupled with the shaft (4),
(c) an electric generator (10) which is disposed with its rotor (24) coaxial to the shaft (4) of the combustion engine (2) between the latter and the input of the drive line (6), and is driven directly by the shaft (4);
(d) and a power electronics unit (12) having the electrical output of the generator (10) connected thereto,
**characterized in**
(e) that the power electronics unit (12) is connected to said combustion engine (2) and is designed such that, with changes in electrical output power of said generator (10), it can control the combustion engine (2) to correspondingly changed mechanical power;
(f) and that the power electronics unit (12) has a direct-voltage intermediate circuit having connected thereto
- electric loads directly and/or
- electronic assemblies (13a, 13b, 13c, 13d) for voltage conversion for different direct voltages and/or alternating voltages of one or more frequencies.

2. A motor vehicle comprising
(a) a combustion engine (2) having a shaft (4);
(b) a mechanical drive line (6) coupled with the shaft (4),
(c) an electric generator (10) which is disposed with its rotor (24) coaxial to the shaft (4) of the combustion engine (2) between the latter and the input of the drive line (6), and is driven directly by the shaft (4);
(d) and a power electronics unit (12) having the electrical output of the generator (10) connected thereto,
**characterized in**
(e) that the power electronics unit (12) is connected to said combustion engine (2) and is designed such that, with changes in electrical output power of said generator (10), it can control the combustion engine (2) to correspondingly changed mechanical power;
(f) and that the power electronics unit (12) produces on its output side directly voltages and frequencies for various loads.

3. The vehicle of claim 1,
**characterized in** said direct-voltage intermediate circuit delivers a direct voltage between 100 V and 1000 V.

4. The vehicle of any of claims 1 to 3,
**characterized in that** the rotor (24) and the stator (22) of the generator (10) are disposed spatially between the combustion engine (2) and a transmission (8).

5. The vehicle of any of claims 1 to 4,
**characterized in that** the generator (10) is formed in outside rotor construction with the rotor (24) outside and the stator (22) inside.

6. The vehicle of any of claims 1 to 4,
**characterized in that** the generator (10) is formed in inside rotor construction with the rotor (24) inside and the stator (22) outside.

7. The vehicle of any of claims 1 to 5,
**characterized in that** the rotor (24) is provided with permanent-magnetic excitation.

8. The vehicle of any of claims 1 to 7,
**characterized in that** rotor (24) and stator (22) of generator (10) are each formed as thin-walled cylinders so that a part of the mechanical drive line (6) is received in the space located radially inside with respect to stator (22) and rotor (24).

9. The vehicle of any of claims 1 to 8,
**characterized in that** the ratio of mounting diameter to axial mounting length of the generator (10) is ≥ 2.

10. The vehicle of any of claims 1 to 9,
**characterized in that** the rotor (24) of the generator (10) is formed as a flywheel of the combustion engine (2).

11. The vehicle of any of claims 1 to 10,
**characterized in that** the rotor (24) of the generator (10) is provided with external teeth means meshing with a starter pinion (30).

12. The vehicle of any of claims 1 to 11,
**characterized in that** the housing (20) of the generator (10) is equipped with mounting flanges corresponding to the standard dimensions of flanges of combustion engines (2).

13. The vehicle of any of claims 1 to 12,
**characterized in that** the power electronics unit (12) includes an electric/electronic power control for the sum of the loads connected.

14. The vehicle of any of claims 1 to 12,
**characterized in that** a separate power control is provided for individual loads or load groups.

15. The vehicle of any of claims 1 to 14,
**characterized in that** the electric generator (10) supplies power to the on-board wiring system of the vehicle and/or feeds external additional electric means.

16. The vehicle of any of claims 1 to 15,
**characterized in that** the generator (10) is operable as a motor and operates with respect to the drive line (6) or serves either as a starter (32) for the combustion engine (2) or supports a separate starter motor (32).

17. The vehicle of claim 16,
**characterized in that** the power electronics unit (12) is designed such that, in addition to the power electronics commutation in the generator mode, it also performs control of the generator (10) in the motor mode.

18. The vehicle of claim 16 or 17,
**characterized in that** the power electronics unit (12) has its own electronic assembly for the motor mode of operation of the generator (10).

19. The vehicle of any of claims 1 to 18,
**characterized in that** the generator (10) operating in the generator mode or motor mode is used for damping speed disturbances or torsional vibrations occurring on the shaft of the combustion engine (2) and/or in the transmission (8) and/or in the mechanical drive line (6).

20. The vehicle of claim 19,
**characterized in that** the generator (10) is equipped for torsional vibration damping with an additional power electronics and control assembly.

## Revendications

1. Véhicule automobile comportant
(a) un moteur à combustion interne (2) avec un arbre (4) ;
(b) une chaîne cinématique mécanique (6) qui est accouplée à l'arbre (4) ;
(c) un générateur électrique (10) dont le rotor (24) est disposé coaxialement à l'arbre (4) du moteur à combustion interne (2), entre celui-ci et l'entrée de la chaîne cinématique (6), et est directement entraîné par l'arbre (4)
(d) et une électronique de puissance (12) à laquelle est raccordée la sortie électrique du générateur (10),
**caractérisé en ce que**
(e) l'électronique de puissance (12) est reliéé au moteur à combustion interne (2) et est conçue de manière qu'en cas de variations de la puissance électrique délivrée par le générateur (10), elle puisse commander le moteur à combustion interne (2) sur une puissance mécanique modifiée en conséquence ;
(f) et **en ce que** l'électronique de puissance (12) comporte un circuit intermédiaire à tension continue auquel sont raccordés
- directement des récepteurs électriques et/ou
- des composants électroniques (13a, 13b, 13c, 13d) pour la conversion de la tension pour différentes tensions continues et/ou tensions alternatives d'une ou de plusieurs fréquences.

2. Véhicule automobile comportant :
(a) un moteur à combustion interne (2) avec un arbre (4) ;
(b) une chaîne cinématique mécanique (6) qui est accouplée à l'arbre (4) ;
(c) un générateur électrique (10) dont le rotor (24) est disposé coaxialement à l'arbre (4) du moteur à combustion interne (2), entre celui-ci et l'entrée de la chaîne cinématique (6), et est directement entraîné par l'arbre (4)
(d) et une électronique de puissance (12) à laquelle est raccordée la sortie électrique du générateur (10),
**caractérisé en ce que**
(e) l'électronique de puissance (12) est reliée au moteur à combustion interne (2) et est conçue de manière qu'en cas de variations de la puissance électrique délivrée par le générateur (10), elle puisse commander le moteur à combustion interne (2) sur une puissance mécanique modifiée en conséquence ;
(f) et **en ce que** l'électronique de puissance (12) produit directement côté sortie des tensions et des fréquences pour différents récepteurs.

3. Véhicule selon la revendication 1, **caractérisé en ce que** le circuit intermédiaire à tension continue fournit une tension continue comprise entre 100 V et 1 000 V.

4. Véhicule selon l'une des revendications 1 à 3, **caractérisé en ce que** le rotor (24) et le stator (22) du générateur (10) sont disposés dans l'espace entre le moteur à combustion interne (2) et une transmission (8).

5. Véhicule selon l'une des revendications 1 à 4, **caractérisé en ce que** le générateur (10) est du type à induit extérieur avec rotor (24) extérieur et stator (22) intérieur.

6. Véhicule selon l'une des revendications 1 à 4, **caractérisé en ce que** le générateur (10) est du type à induit intérieur avec rotor (24) rotatif intérieur et stator (22) extérieur.

7. Véhicule selon l'une des revendications 1 à 5, **caractérisé en ce que** le rotor (24) est prévu avec excitation magnétique permanente.

8. Véhicule selon l'une des revendications 1 à 7, **caractérisé en ce que** le rotor (24) et le stator (22) du générateur (10) sont réalisés chacun sous la forme d'un cylindre à paroi mince, ce qui fait que dans l'espace situé radialement à l'intérieur par rapport au stator (22) et au rotor (24), est reçue une partie de la chaîne cinématique mécanique (6).

9. Véhicule selon l'une des revendications 1 à 8, **caractérisé en ce que** le rapport entre le diamètre de montage et la longueur axiale de montage du générateur (10) est ≥ 2.

10. Véhicule selon l'une des revendications 1 à 9, **caractérisé en ce que** le rotor (24) du générateur (10) est réalisé sous la forme du disque en volant du moteur à combustion interne (2).

11. Véhicule selon l'une des revendications 1 à 10, **caractérisé en ce que** le rotor (24) du générateur (10) est pourvu d'une denture extérieure qui engrène avec un pignon (30) du démarreur.

12. Véhicule selon l'une des revendications 1 à 11, **caractérisé en ce que** le carter (20) du générateur (10) est équipé de brides de fixation qui correspondent aux cotes normalisées des brides des moteurs à combustion interne (2).

13. Véhicule selon l'une des revendications 1 à 12, **caractérisé en ce que** l'électronique de puissance (12) contient une régulation de puissance électrique/électronique pour l'ensemble des récepteurs raccordés.

14. Véhicule selon l'une des revendications 1 à 12, **caractérisé en ce qu'**il est prévu une régulation de puissance séparée pour récepteurs isolés ou groupes de récepteurs.

15. Véhicule selon l'une des revendications 1 à 14, **caractérisé en ce que** le générateur électrique (10) alimente le réseau de bord du véhicule et/ou le dispositif électrique supplémentaire externe.

16. Véhicule selon l'une des revendications 1 à 15, **caractérisé en ce que** le générateur (10) peut être entraîné au moyen d'un moteur et agit sur la chaîne cinématique (6) ou sert de démarreur (32) pour le moteur à combustion interne (2), ou soutient un moteur (32) séparé du démarreur.

17. Véhicule selon la revendication 16, **caractérisé en ce que** l'électronique de puissance (12) est conçue de manière à assurer, outre la commutation électronique de puissance en mode générateur, également la commande du générateur (10) en mode moteur.

18. Véhicule selon la revendication 16 ou 17, **caractérisé en ce que** l'électronique de puissance (12) comporte son propre groupe électronique pour le mode de fonctionnement en moteur du générateur (10).

19. Véhicule selon l'une des revendications 1 à 18, **caractérisé en ce que** le générateur (10), qui fonctionne en mode générateur ou mode moteur, est utilisé pour amortir les perturbations de la vitesse de rotation ou des oscillations en rotation qui surviennent sur l'arbre du moteur d'entraînement (2) et/ou dans la ligne mécanique d'entraînement (6).

20. Véhicule selon la revendication 19, **caractérisé en ce que** le générateur (10) est équipé, pour l'amortissement des oscillations en rotation, d'une électronique de puissance supplémentaire et d'un groupe de régulation.
